# EUROPEAN PATENT APPLICATION

(11) **EP 1 912 006 A2**
(43) Date of publication of application: **16.04.2008**
(21) Application number: 07019606.8
(22) Date of filing: 08.10.2007
(51) Int. Cl.: F16L 11/08

(54) **Flexible rubber hose**

(30) Priority: 11.10.2006 IT MI20061952
(71) Applicant: IVG COLBACHNI S.P.A., 35030 Cervarese S. Croce PD (IT)
(72) Inventor: Aldinio-Colbachini, Giuseppe, 35030 Cervarese Santa Crove (Padova) (IT)
(74) Representative: Cicogna, Franco

(57) **Abstract**

A rubber flexible hose, of the type comprising at least an inner layer (1), at least a reinforcement layer (2,3) and an outer layer (5), wherein said at least a reinforcement layer (2,3) and/or said outer layer (5) are made of a carbon fiber is herein disclosed.

## Description

### BACKGROUND OF THE INVENTION

The present invention relates to an improved rubber flexible hose or tube.

The field of the invention is that of the rubber flexible tubes or hoses in general, having an inner reinforcement structure provided for making the tube adapted to convey, for example, chemical products and fuel, and also having, preferably, a comparatively high flame resistance.

The prior art related to flexible rubber hoses, having a reinforcement structure for increasing their mechanical strength, comprises tubes made of synthetic fiber layers, or natural fiber layers, and they are all affected by drawbacks, such as a comparatively high weight, the used reinforcement material being provided in a same amount.

Thus, for example, a conventional rubber tube having a diameter of 38 mm, a reinforcement fabric material with an ultimate tensile strength of 150 kg/cm, has a weight of 4.5 g/dm².

### SUMMARY OF THE INVENTION

The aim of the present invention is to provide a novel reinforced construction tube which, the mechanical strength being the same, has a weight smaller than that of prior art like tubes.

The above and yet other objects are achieved by a reinforced construction rubber tube or hose according to claim 1.

Preferred embodiments of the invention are defined in the remaining claims.

With respect to the hoses or tubes of the prior art, the inventive hose has the advantage that it has an improved handling property, owing to a great reduction of its weight, with a simultaneously enhanced mechanical strength thereof.

Moreover, the invention provides the advantage of a simplified construction hose or tube, owing to the properties conferred to the tube by the used carbon fiber layer, wherein the tube is also adapted to resist against the flame, thereby overcoming the prior art need of providing, in addition to the hose or tube inner reinforcement layer, also an outer anti-flame layer.

### BRIEF DESCRIPTION OF THE DRAWINGS

The above and other objects, advantages and characteristics of the invention will become more apparent hereinafter from the following detailed disclosure of a preferred embodiment of the invention which is illustrated, by way of an indicative, but not limitative, example, in the accompanying drawings, where:
Figure 1 is a broken-away view showing a first embodiment of the hose or tube according to the invention;
Figure 2 shows a modified embodiment of the hose or tube of figure 1, including a reinforcement inner coil element;
Figures 3 and 4 show the tube of figure 2, provided with respective outer and inner corrugated patterns;
Figure 5 shows the hose of figure 2, including corrugated patterns on both its outer and inner surfaces;
Figure 6 shows a modified embodiment of the hose of figure 1, with an outer layer of a plastics material, in general, or of a rubber material, in particular;
Figure 7 shows a further modified embodiment of the hose of figure 6, in which is embedded an outer surface electric conductor; and
Figure 8 shows the results of comparable flame tests respectively on a standard conventional hose or tube and on a hose or tube according to the present invention.

### DESCRIPTION OF THE PREFERRED EMBODIMENTS

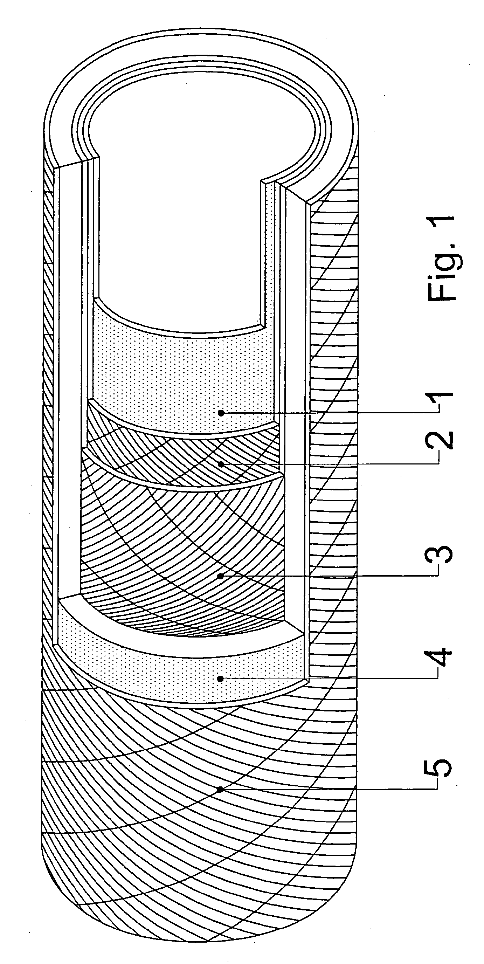

The hose or tube shown in figure 1 comprises a smooth inner layer 1, made of rubber or of a plastics material in general, thereon are wound two layers 2, 3 of a textile reinforcement material, made of a carbon fiber.

On the outermost layer 3 is applied a rubber layer 4 and, on the latter, a further outer layer 5, also made of a carbon fiber material, and operating as an anti-flaming layer.

In the embodiment herein disclosed, the carbon fiber fabric can be used for making only the outer anti-flame layer 5 or, respectively, only the reinforcement inner layer 2, or the outermost layer 3.

In this latter case, the anti-flame outer layer 5 can be omitted.

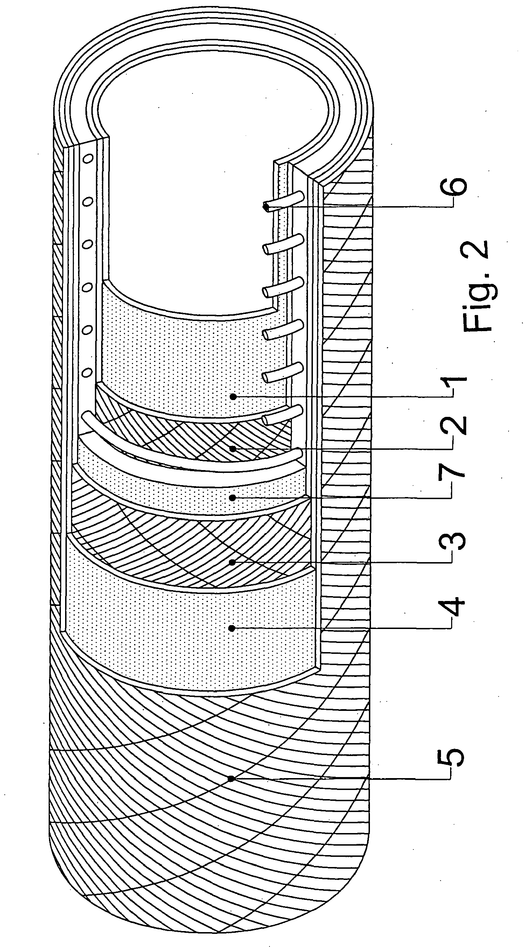

In the modified embodiment shown in figure 2, the construction of the hose of figure 1 further comprises an inner reinforcement coil element 6, made of a metal or synthetic material, in turn embedded in a rubber layer 7.

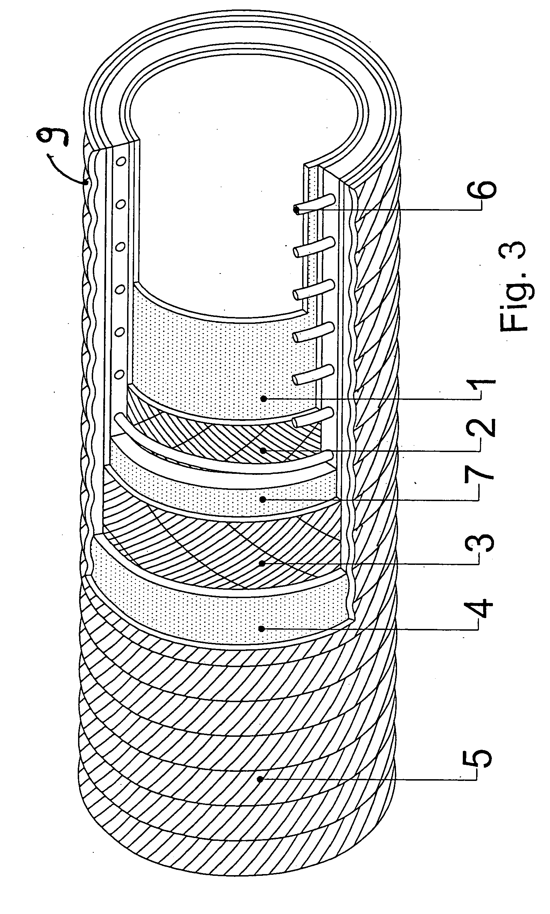

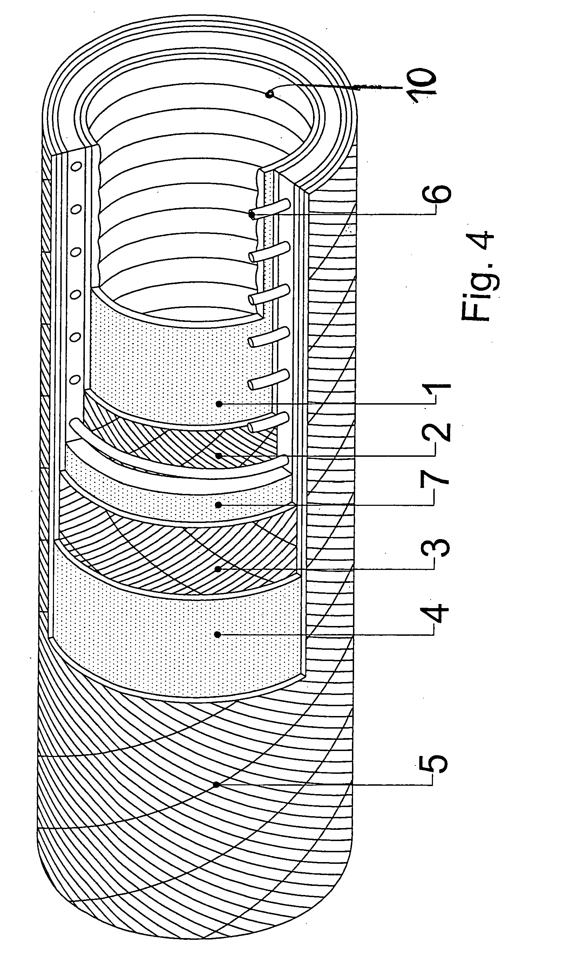

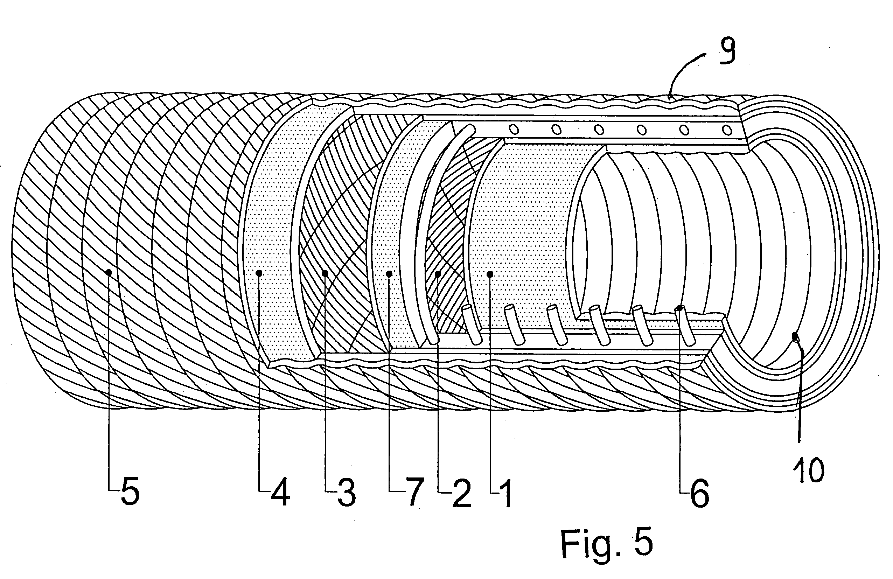

In the modified embodiments of figures 3 and 4, the hose or tube of figure 2 further comprises corrugated patterns, respectively 9 on the outer layer 5, and 10 on the inner layer 1, both said corrugated patterns being provided in the embodiment shown in figure 5.

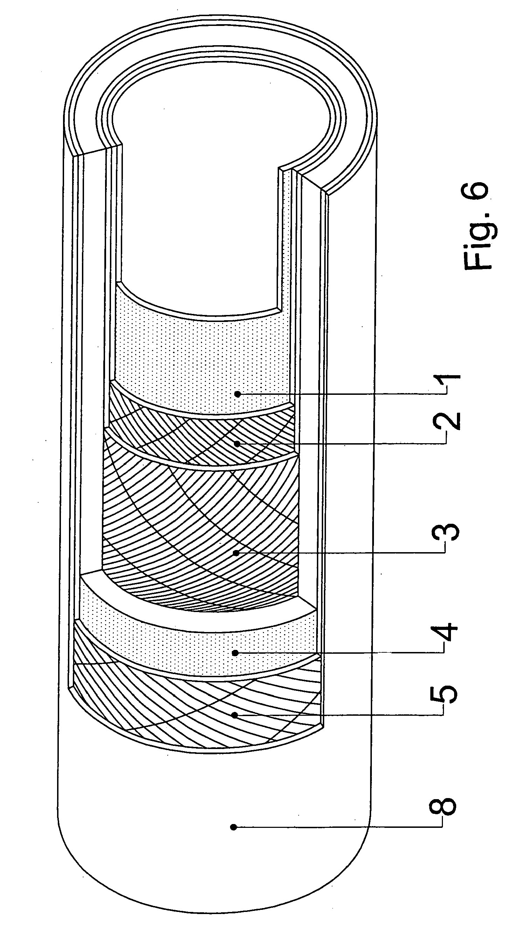

According to the embodiment shown in figure 6, the hose of figure 1 further comprises a finishing outer coating layer 8, made of a plastics material in general, or of rubber.

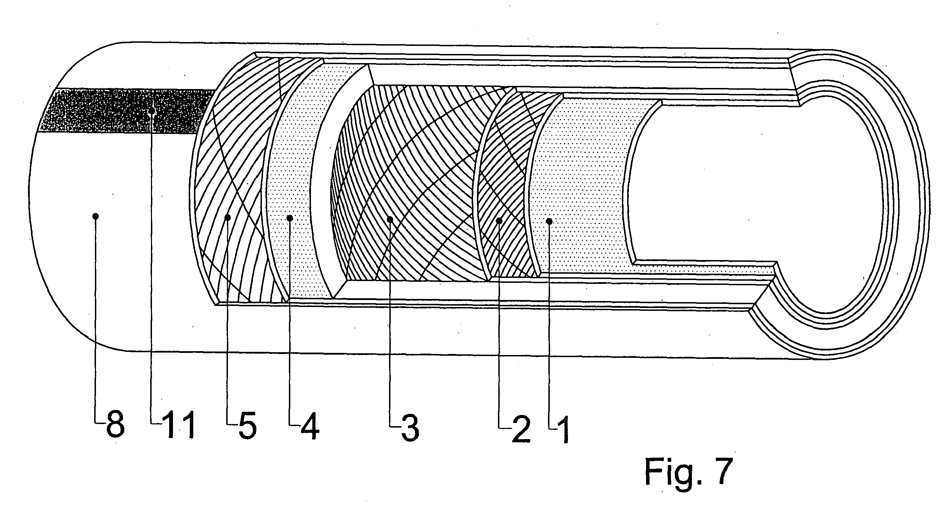

In the modified embodiment of figure 7, moreover, the hose of figure 6 further comprises, on the outer coating 8, a strip 11 made of an electrically conductive material.

The thickness of the carbon fiber layers, moreover, is not critical and is selected depending on the overall diameter of the hose, thereby preserving its designed construction and its provided specific application.

### Hydrostatic tests

To clearly show the improved mechanical strength of the inventive hose with respect to prior like hoses, a plurality of rubber hose samples, having respective diameter of 38 mm and 51 mm, and identified by suitable differently colored ring elements, indicative of the weight per linear meter and the burst pressure have been prepared, to be subjected to designed hydrostatic tests.

The results of the performed tests have been shown in the following table:

**TABLE**

| | Diameter (mm) | Weight (g/m) | Burst pressure (bar) |
|---|---|---|---|
| Hose including standard textile inserts | 38 | 883 | 72 |
| | 51 | 1157.8 | 56 |
| Hose including carbon fiber inserts (invention) | 38 | 718.3 | 81 |
| | 51 | 968.8 | 68 |

Accordingly:
- the hose or tube according to the present invention, having a diameter of 38 mm (inner reinforcement layer of the hose of figure 1, with an ultimate tensile stress of 150 kg/cm and a weight of 2.18 g/dm² has a weight less than 18.6% of the weight of a corresponding prior art hose, with an increase of 11.1% of the burst mechanical strength;
- the hose having a diameter of 51 mm, according to the invention, has a weight which is by 16.36% less than that of a prior like hose, i.e. having the same diameter, with an increase of the burst resistance corresponding to 17.6%.

### Flame performance

The improved flame performance of the hose according to the present invention has been obtained by comparing two hoses or tubes having a diameter of 38 mm: the first, of a conventional type, including standard textile inserts, and a covering or outer layer made of a rubber material; and the second, according to the invention, also including textile inserts, but with a carbon fiber covering.

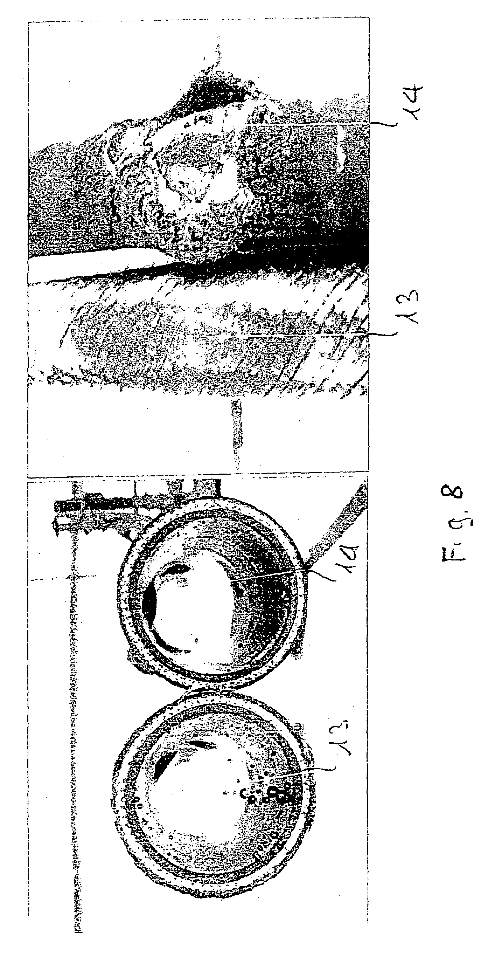

As clearly shown in figure 8, the standard sample 14 started to burn after 2'04", to achieve a full degradation. The hose or tube 13 according to the present invention, on the contrary, after the same time, remained intact.

## Claims

1. A rubber flexible hose, of a type comprising at least an inner layer (1), at least a reinforcement layer (2, 3) and an outer layer (5), **characterized in that** said at least reinforcement layer (2, 3) and/or said outer layer (5) are made of carbon fibers.

2. A hose according to claim 1, **characterized in that** said hose comprises an inner reinforcement coil element (6) made either of a metal or a synthetic material, and being embedded in a rubber layer (7).

3. A hose according to claim 1 or 2, **characterized in that** said hose comprises outer (9) and/or inner (10) corrugated patterns on said outer (5) and inner (1) layers of said hose.

4. A hose according to one or more of the preceding claims, **characterized in that** said hose further comprises, on said outer layer (5), a further layer (8) made of any desired plastics materials, or of a rubber material.

5. A hose according to claim 4, **characterized in that** said hose further comprises, on said layer (8), an electrical conductive material strip (11).
